# EUROPÄISCHE PATENTANMELDUNG

(11) **EP 3 789 158 A1**
(43) Veröffentlichungstag der Anmeldung: **10.03.2021**
(21) Anmeldenummer: 20193403.1
(22) Anmeldetag: 28.08.2020
(51) Int. Cl.: B23K 26/402, B23K 26/60, B23K 26/0622, B23K 26/36, B23K 26/03, B23K 26/082, B23K 101/00, B23K 103/00, B23K 101/34

(54) **VERFAHREN ZUM HERSTELLEN VON MINDESTENS EINER MEHRERE MUSTERELEMENTE UMFASSENDEN MUSTERFIGUR MITTELS EINES LASERS**

(30) Priorität: 04.09.2019 DE 102019123654
(71) Anmelder: JENOPTIK Automatisierungstechnik GmbH, 07745 Jena (DE)
(72) Erfinder: Kuhl, Oliver, 07745 Jena (DE); Bode-Mosig, Andreas, 07747 Jena (DE); Seidel, Frank, 07616 Thalbürgel (DE); Hielscher, Jürgen, 07747 Jena (DE)
(74) Vertreter: Waldauf, Alexander

(57) **Zusammenfassung**

Die Erfindung betrifft ein Verfahren zum Herstellen von mindestens einer mehrere Musterelemente (5) umfassenden Musterfigur (6) mittels eines Lasers (8) in ein auf einer ersten Oberfläche (20) beschichtetes zumindest teilweise transparentes Bauteil (1) mit den folgenden Schritten:
- Bereitstellen des Bauteils (1);
- Beschichten des Bauteils (1) auf der ersten Oberfläche (20) mit mindestens einer Schicht (3,4);
- Vermessen der beschichteten ersten Oberfläche (20) des Bauteils (1) mit ersten Koordinaten (x1n, y1n, z1n);
- Erstellen der mindestens einen Musterfigur (6) mit zweiten Koordinaten (x2n, y2n, z2n);
- Transformieren der zweiten Koordinaten (x2n, y2n, z2n) der mindestens einen Musterfigur (6) mittels der ersten Koordinaten (x1n, y1n, z1n) der beschichteten ersten Oberfläche (20) des Bauteils (1) in dritte Koordinaten (x3n, y3n, z3n);
- Transformieren der dritten Koordinaten (x3n, y3n, z3n) in Steuerkoordinaten des Lasers (8) und /oder des Bauteils (1);
- Bestrahlen der beschichteten ersten Oberfläche (20) mittels einer Laserstrahlung (13) des Lasers (8) mittels der Steuerkoordinaten;
- Messen der Laserstrahlung (13) auf einer der ersten Oberfläche (20) gegenüberliegender zweiten Oberfläche (21) des Bauteils (1) mittels einer Sensorik (11);
- Vergleichen der durch die Sensorik (11) empfangenen Laserstrahlung (13) mit einem Referenzwert; und
- Abschalten der Laserstrahlung (13) mit Erreichen des Referenzwertes.

## Beschreibung

### Stand der Technik

Die vorliegende Erfindung bezieht sich auf ein Verfahren zum Herstellen von mindestens einer mehrere Musterelemente umfassenden Musterfigur mittels eines Lasers in ein auf einer ersten Oberfläche beschichtetes zumindest teilweise transparentes Bauteil.

Im Stand der Technik ist in diesem Zusammenhang die Druckschrift DE 10 2010 032 190 A1 bekannt, die eine Leuchteinheit für ein Kraftfahrzeug mit einer Anzahl von Leuchtmitteln und einem in deren Abstrahlbereich angeordneten Durchstrahlungskörper offenbart. Dessen Oberfläche ist auf der Seite des Lichtaustritts mit einer dekorativen Beschichtung versehen, wobei die Beschichtung in der Art einer Perforation mit einer Anzahl von Durchbrüchen versehen ist, durch die das aus dem Durchstrahlungskörper austretende Licht im Wesentlichen unbeeinträchtigt hindurchtreten kann. Beschrieben wird die Perforation auch durch nachträgliches Entfernen kleiner Bereiche aus der vollflächigen Beschichtung.

Das nachträgliche Entfernen von Schichten für eine geplante Hinterleuchtung erfordert eine hohe Präzision, da durch die Hinterleuchtung der abgetragenen Flächen in regelmäßigen Mustern auch kleinste geometrische Abweichungen optisch sichtbar werden. Dies gilt ebenso für Abweichungen in der Transparenz. Herstellungsbedingte Toleranzen der Durchstrahlkörper und der aufgetragenen Schichten sind im Verfahren der nachträglichen Entfernung zu berücksichtigen. Diese Anforderungen in ihrer Komplexität erfordern einen gesteuerten Prozess, welcher erfindungsgemäß mittels Laserbearbeitung erfolgt.

### Offenbarung der Erfindung

Vor diesem Hintergrund wird mit der vorliegenden Erfindung ein Verfahren zum Herstellen von mindestens einer mehrere Musterelemente umfassenden Musterfigur mittels eines Lasers in ein auf einer ersten Oberfläche beschichtetes zumindest teilweise transparentes Bauteil mit den folgenden Schritten beschrieben:
- Bereitstellen des Bauteils;
- Beschichten des Bauteils auf der ersten Oberfläche mit mindestens einer Schicht;
- Vermessen der beschichteten ersten Oberfläche des Bauteils mit ersten Koordinaten (x1n, y1n, z1n);
- Erstellen der mindestens einen Musterfigur mit zweiten Koordinaten (x2n, y2n, z2n);
- Transformieren der zweiten Koordinaten (x2n, y2n, z2n) der mindestens einen Musterfigur mittels der ersten Koordinaten (x1n, y1n, z1n) der beschichteten ersten Oberfläche des Bauteils in dritte Koordinaten (x3n, y3n, z3n);
- Transformieren der dritten Koordinaten (x3n, y3n, z3n) in Steuerkoordinaten des Lasers und /oder des Bauteils;
- Bestrahlen der beschichteten ersten Oberfläche mittels einer Laserstrahlung des Lasers mittels der Steuerkoordinaten;
- Messen der Laserstrahlung auf einer der ersten Oberfläche gegenüberliegender zweiten Oberfläche des Bauteils mittels einer Sensorik;
- Vergleichen der durch die Sensorik empfangenen Laserstrahlung mit einem Referenzwert; und
- Abschalten der Laserstrahlung mit Erreichen des Referenzwertes.

Vorteilhafte Ausgestaltungen ergeben sich aus den jeweiligen Unteransprüchen und der nachfolgenden Beschreibung.

Ein wesentlicher Vorteil der Erfindung ist die Möglichkeit, eine oder mehrere Musterfiguren in beliebig definierter Größe, Geometrie und Transparenz auf definierte Positionen eines auf einer ersten Oberfläche beschichteten zumindest teilweise transparenten Bauteils herzustellen.

In einer besonders bevorzugten Ausführungsform kann der Schritt des Bereitstellens ein Positionieren des Bauteils in einer Fixiervorrichtung umfassen. Die Fixiervorrichtung kann beispielsweise mit Markierungen ausgebildet sein, so dass das Bauteil positionsgenau in der Fixiervorrichtung und in definierter Relativlage zur Laserstrahlung positioniert sein kann.

In einer weiteren bevorzugten Ausführungsform kann an der Fixiervorrichtung ein Robotermodul, insbesondere ein 6-Achs-Robotermodul, angreifen und das Bauteil, relativ zur bearbeitenden Laserstrahlung, im dreidimensionalen Raum bewegen.

In einer weiteren bevorzugten Ausführungsform kann der Schritt des Beschichtens ein Beschichten mit einer Grundierschicht und einer Deckschicht umfassen. Die Grundierschicht kann beispielsweise als ein Primer ausgebildet sein, welcher die Haftung zwischen einem Träger und einer weiteren Schicht verbessern soll. Die Deckschicht kann beispielsweise als Lackschicht, wie sie üblicherweise in der Lackierung von Fahrzeugen zum Einsatz kommt, ausgebildet sein. In diesem Ausführungsbeispiel umfasst das Bauteil somit zumindest einen Träger, eine Grundierschicht und eine Deckschicht.

In einer weiteren bevorzugten Ausführungsform erfolgt das Vermessen des 3D geformten Bauteils mit einer 3D Kamera, welche beispielhaft nach dem Stereoprinzip arbeitet oder als Triangulationsmesssystem ausgebildet ist. Die vermessene 3D Kontur liegt als Datensatz mit ersten Koordinaten (x1n, y1n, z1n), z.B. im CAD-Format, vor.

In einer weiteren bevorzugten Ausführungsform kann der Laser einen Scanner, insbesondere einen 3-Achs-Galvanometerscanner, welcher die Laserstrahlung relativ zum Bauteil im dreidimensionalen Raum bewegt, umfassen. Die dritten Koordinaten werden in Steuerkoordinaten des Scanners transformiert.

In einer weiteren bevorzugten Ausführungsform kann der Laser als Kurzpulslaser ausgebildet sein, dessen Laserpulse eine Länge von beispielsweise 1 - 10 ps und eine Pulswiederholfrequenz von 10 -100 kHz aufweisen kann. Der verringerte Energieeintrag stellt sicher, dass benachbarte Regionen der einzelnen Musterelemente nicht beschädigt werden.

In einer weiteren bevorzugten Ausführungsform kann die Sensorik ein Array aus mehreren fotoelektrischen Sensoren (Sensorik Array) umfassen. Die Anordnung der Sensoren im Array ist der/den herzustellenden Musterfiguren angepasst. Dies ermöglicht einen schnellen Ablauf in der Herstellung der mindestens einen Musterfigur, da eine Relativbewegung der Sensorik zur Laserstrahlung und/oder zum Bauteil entfallen kann.

In einer weiteren bevorzugten Ausführungsform kann das Herstellen der Musterelemente seriell oder in mehreren Umläufen erfolgen. In der seriellen Herstellung wird jedes Musterelement jeweils bis zum Erreichen des Referenzwertes mit der Laserstrahlung beaufschlagt.

In der Herstellung in mehreren Umläufen werden die Musterelemente in mehreren Umläufen entlang der herzustellenden Musterfigur/en gelasert. Dabei wird jedes Musterelement in jedem Umlauf mit Laserstrahlung gleicher Energie beaufschlagt. Mittels der Sensorik werden die Musterelemente erfasst, welche den Referenzwert erreicht haben. Die Musterelemente, welche den Referenzwert erreicht haben, werden mittels der Lasersteuerung im nächsten Umlauf übersprungen und nicht mehr gelasert. Die Umläufe werden so lange wiederholt bis alle Musterelemente den Referenzwert erreicht haben.

In einer weiteren bevorzugten Ausführungsform wird der mittels Sensorik gemessene Wert mit einem vorab ermittelten Referenzwert verglichen. Für das Erreichen einer gleichmäßigen Transparenz aller Musterfiguren werden alle Musterelemente mit einem vorab bestimmten Referenzwert bearbeitet.
Mit Erreichen des vorab definierten Referenzwertes wird die Laserstrahlung abgeschalten.

Die Erfindung wird nachstehend anhand der beigefügten Zeichnungen beispielhaft näher erläutert. Es zeigen:
- Fig. 1: ein Bauteil in Seitenansicht mit einem Musterelement;
- Fig. 2: ein Bauteil in Draufsicht mit einem Musterelement und einer mehrere Musterelemente umfassende Musterfigur;
- Fig. 3: ein Bauteil in Draufsicht mit einer Mehrzahl von einzelnen Musterfiguren;
- Fig. 4: eine Vorrichtung zur Durchführung des erfindungsgemäßen Verfahrens

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

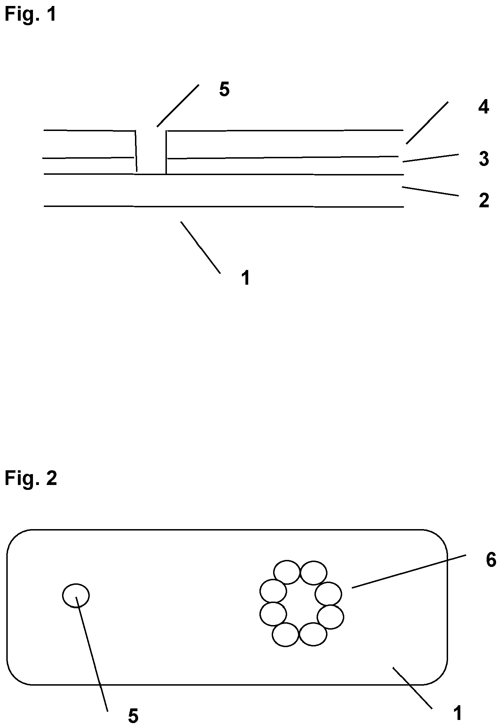

Fig. 1 zeigt ein Bauteil 1 in Seitenansicht mit einem Musterelement 5.
Als Bauteile 1 können Exterieur Bauelemente aus der Fahrzeugindustrie betrachtet werden. Dabei handelt sich um 3D geformte, transparente Kunststoffteile wie z.B. Spoiler oder Stoßfänger. Als Materialien für einen Träger 2 kommen beispielsweise Polycarbonat (PC) oder Acrylnitril-Butadien-Styrol (ABS) zum Einsatz. Der Träger 2 ist beschichtet. Die Beschichtung erfolgt meist mit einer Grundierungsschicht 3 (Primer) und einer dekorativen Lackschicht 4.

Fig. 1 zeigt weiterhin ein erstes Musterelement 5, welches durch den lokalen Abtrag beider Schichten 3,4 bis auf den Träger 2 gekennzeichnet ist.

In Fig. 2 ist in Draufsicht aufgezeigt, wie einzelne Musterelemente 5 zu einer Musterfigur 6, beispielhaft ein Kreis, kombiniert werden.

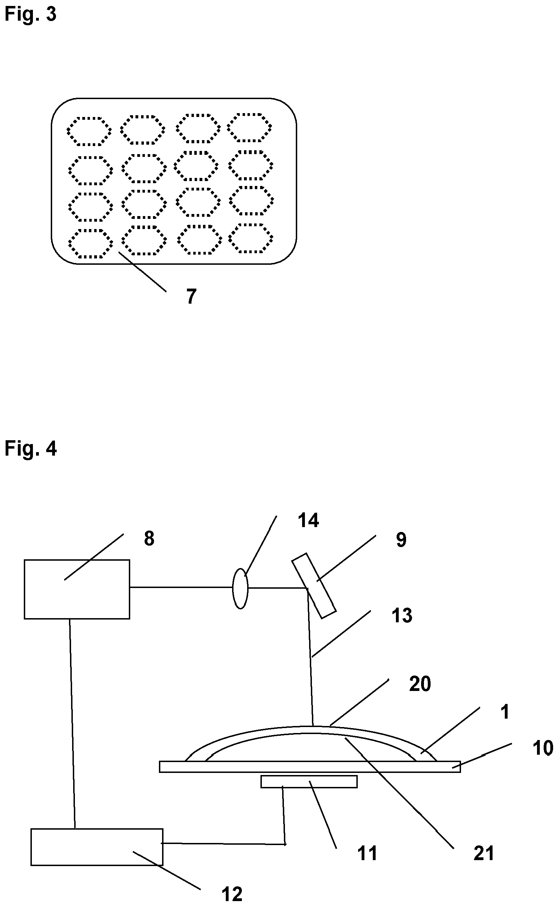

Eine Aneinanderreihung von Musterfiguren 6 innerhalb einer Fläche 7 ist in der Fig. 3 beispielhaft dargestellt.

Das erfindungsgemäße Verfahren erfordert eine Relativbewegung zwischen Bauteil 1 und der bearbeitenden Laserstrahlung 13. Realisierbar ist dies beispielsweise über eine Bewegung des Lasers 8 und/oder über eine Bewegung des Bauteils 1 und/oder über eine Bewegung der Laserstrahlung 13. Die definierte Bewegung der Laserstrahlung 13 erfolgt üblicherweise mit einem Scanner 9. Das Bauteil 1 kann in einer Fixiervorrichtung 10 mittels eines Robotermoduls (nicht dargestellt) vor der Laserstrahlung 13 bewegt werden. Eine Kombination der drei Bewegungen ist ebenso möglich. Die weitere Beschreibung des Verfahrens offenbart beispielhaft den Einsatz eines Scanners 9. Somit sind in diesem Ausführungsbeispiel sowohl der Laser 8 als auch das Bauteil 1 nicht beweglich angeordnet.

Fig. 4 zeigt eine Vorrichtung zur Durchführung des erfindungsgemäßen Verfahrens.

Das bereitgestellte Bauteil 1 ist auf einer ersten Oberfläche 20 mit mindestens einer Schicht 3,4 beschichtet. Die im Beispiel beschriebenen Exterieur Bauelemente sind üblicherweise mit einer Grundierung 3 (Primer) und einer dekorativen Lackschicht 4 beschichtet.

In der weiteren Bearbeitung ist die Halterung des Bauteils 1 in einer Fixiervorrichtung 10 vorgesehen. Für eine positionsgenaue Lage des Bauteils 1 in der Fixiervorrichtung 10 und eine definierte Relativlage des Bauteils 1 zur bearbeitenden Laserstrahlung 13 ist mindestens eine Markierung einzubringen. Diese Markierung kann auf der Fixiervorrichtung 10 und/oder auf dem Bauteil 1 aufgebracht sein und wird als Referenzpunkt für die nachfolgende Vermessung und Bearbeitung genutzt. Der Referenzpunkt kann als Koordinatenursprung eines dreidimensionalen Koordinatensystems x-y-z ausgebildet sein.

Für eine Positionierung des Bauteils 1 mittels Robotermodul greift das Robotermodul die Fixiervorrichtung 10 mit dem darin fixierten Bauteil 1.

Vermessen wird bevorzugt das gesamte, dreidimensional geformte, Bauteil 1. Es ist erfindungswesentlich, dass jedoch zumindest die Bereiche, auf welchen die Musterfiguren 6 hergestellt werden sollen, vermessen werden. Die Vermessung erfolgt dreidimensional, bevorzugt mittels einer 3D Kamera. Im Ergebnis liegen erste Koordinaten (x1n, y1n, z1n) als Datensatz, beispielsweise im CAD Format vor.

Die herzustellenden Musterfiguren 6 umfassen einzelne Musterelemente 5, variierbar in ihrer Größe, Geometrie und Positionierung zueinander. Die in den Figuren dargestellten Punkte stehen als Beispiel für beliebige geometrische Formen, welche mittels einer Laseroptik 14 fokussierbar sind.

Die Erstellung der herzustellenden Musterfiguren 6 erfolgt mit einem Datensatz von zweiten Koordinaten (x2n, y2n, z2n), bevorzugt im gleichen Format wie die ersten Koordinaten (x1n, y1n, z1n), welche nach der Vermessung vorliegen.

Mittels einer speziellen Mapping - Software erfolgt eine Transformation der zweiten Koordinaten (x2n, y2n, z2n) der zu erstellenden Musterfiguren 6 mittels der ersten Koordinaten (x1n, y1n, z1n) der beschichteten ersten Oberfläche 20 des Bauteils 1. Im Ergebnis dieser Transformation liegen dritte Koordinaten (x3n, y3n, z3n) vor, welche eine Abbildung der zu erstellenden Musterfiguren 6 auf die exakt vermessene Oberfläche 20 des realen Bauteils 1 darstellen. Die dritten Koordinaten (x3n, y3n, z3n) stellen genau die Positionen auf dem Bauteil 1 dar, auf welchen die Bearbeitung durch die Laserstrahlung 13 erfolgen soll.

Diese dritten Koordinaten (x3n, y3n, z3n) können in Steuerkoordinaten des Lasers 8 und/oder des Scanners 9 und/oder des Bauteils 1 transformiert werden.

Mit den Steuerkoordinaten wird sichergestellt, dass die Laserstrahlung 13 an der richtigen Position auf das Bauteil 1 trifft. Mittels geeigneter Laseroptik 14 können Größe und Geometrie der Musterelemente 5 modifiziert werden.
Das Verfahren ist damit äußerst flexibel und ermöglicht so das Einbringen von beliebigen Musterfiguren 6 in unterschiedlichsten Geometrien.

Es ist notwendig, den Energieeintrag der Laserstrahlung 13 so gering wie möglich zu halten. Dies stellt sicher, dass das die Musterelemente 5 umgebende Material nicht geschädigt wird. Erfahrungsgemäß kommt hierfür ein Kurzpulslaser, bevorzugt mit Laserpulsen einer Länge von 1 - 10 ps und einer Pulswiederholfrequenz von 10 - 100 kHz zum Einsatz.

Ein weiterer wichtiger Aspekt des beschriebenen Verfahrens ist die Einstellung einer definierten Transparenz über alle Musterelemente 5. Dies wird mittels einer Sensorik 11 umgesetzt.

Die Sensorik 11, üblicherweise nach fotoelektrischem Prinzip, empfängt die Laserstrahlung 13 auf einer der ersten Oberfläche 20 gegenüberliegenden zweiten Oberfläche 21 des transparenten Bauteils 1 und detektiert damit den durch den Träger 2 hindurchtretenden transparenten Anteil der Laserstrahlung 13.

In vorangegangenen Versuchen werden Referenzwerte bestimmt, welche zur Steuerung der Laserstrahlung 13 genutzt werden können.

Mit Erreichen des vorab ermittelten und hinterlegten Referenzwertes, und damit der gewünschten Transparenz des Bauteils 1, geht von der Sensorik 11 ein Signal an die Lasersteuerung 12, welche die Laserstrahlung 13 abschaltet.
Dies kann seriell erfolgen, d.h. jedes Musterelement 5 wird bis zum Erreichen des Referenzwertes gelasert. Danach erfolgt eine gesteuerte Relativbewegung zwischen Laserstrahlung 13 und Bauteil 1 und das nächste Musterelement 5 der herzustellenden Musterfigur 6 wird in gleicher Weise hergestellt.

Weiterhin besteht die Möglichkeit, die Musterelemente 5 in mehreren Umläufen entlang der herzustellenden Musterfigur/en 6 zu lasern. Dabei wird jedes Musterelement 5 in jedem Umlauf mit Laserstrahlung 13 gleicher Energie beaufschlagt. Mittels Sensorik 11 werden die Musterelemente 5 erfasst, welche den Referenzwert erreicht haben. Die Musterelemente 5, welche den Referenzwert erreicht haben, werden mittels der Lasersteuerung 12 im nächsten Umlauf übersprungen und nicht mehr gelasert. Die Umläufe werden so lange wiederholt bis alle Musterelemente 5 der Musterfigur/en 6 den Referenzwert erreicht haben.

Die Sensorik 11 umfasst mindestens einen fotoelektrischen Sensor. Es muss sichergestellt werden, dass sich die Sensorik 11 zum Zeitpunkt der Bearbeitung und der Messung des durch das Bauteil 1 hindurchtretenden transparenten Anteils der Laserstrahlung 13 in der optischen Achse der Laserstrahlung 13 befindet.

Die Positionierung der Sensorik 11 in die optische Achse der Laserstrahlung 13 kann durch eine Relativbewegung zwischen Laserstrahlung 13 und Sensorik 11 bzw. zwischen Bauteil 1 und Sensorik 11 umgesetzt werden.

Weiterhin ist der Einsatz eines Sensorikarrays möglich, welches aus einer definierten Anordnung mehrerer Sensoren besteht. Durch eine an die mindestens eine zu erstellende Musterfigur 6 angepasste Anordnung von Sensoren in einem Array kann eine ansonsten notwendige Relativbewegung umgangen werden.

Der Einsatz eines Sensorik Arrays eignet sich insbesondere für die Herstellung der Musterfiguren 6 in mehreren Umläufen.

Mit dem erfindungsgemäßen Verfahren ist es möglich, mit einem vorab eingestellten Referenzwert über alle Musterelemente 5 eine homogene Transparenz einzustellen. Eine nachträgliche Qualitätskontrolle ist nicht notwendig, da die Steuerung mittels Referenzwert online im Herstellungsprozess erfolgt.

Weiterhin ist es für das Erzielen spezieller Effekte mit dem erfindungsgemäßen Verfahren auch möglich, auf dem Bauteil 1 durch Variierung des Referenzwertes definierte Abstufungen in der Transparenz der Musterelemente 5 und/oder der Musterfiguren 6 zu realisieren.

Das erfindungsgemäße Verfahren ist somit geeignet, Musterfiguren 6 in beliebig definierter Größe, Geometrie und Transparenz auf definierte Positionen eines auf einer ersten Oberfläche 20 beschichteten zumindest teilweise transparenten Bauteils 1 herzustellen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichenliste

- 1: Bauteil mit Beschichtung
- 2: Träger
- 3: Erste Schicht
- 4: Zweite Schicht
- 5: Musterelement
- 6: Musterfigur
- 7: Musterfiguren innerhalb einer Fläche
- 8: Laser
- 9: Scanner
- 10: Fixiervorrichtung
- 11: Sensorik
- 12: Lasersteuerung
- 13: Laserstrahlung
- 14: Laseroptik
- 20: erste Oberfläche
- 21: zweite Oberfläche

## Patentansprüche

1. Verfahren zum Herstellen von mindestens einer mehrere Musterelemente (5) umfassenden Musterfigur (6) mittels eines Lasers (8) in ein auf einer ersten Oberfläche (20) beschichtetes zumindest teilweise transparentes Bauteil (1) mit den folgenden Schritten:
- Bereitstellen des Bauteils (1);
- Beschichten des Bauteils (1) auf der ersten Oberfläche (20) mit mindestens einer Schicht (3,4);
- Vermessen der beschichteten ersten Oberfläche (20) des Bauteils (1) mit ersten Koordinaten (x1n, y1n, z1n);
- Erstellen der mindestens einen Musterfigur (6) mit zweiten Koordinaten (x2n, y2n, z2n);
- Transformieren der zweiten Koordinaten (x2n, y2n, z2n) der mindestens einen Musterfigur (6) mittels der ersten Koordinaten (x1n, y1n, z1n) der beschichteten ersten Oberfläche (20) des Bauteils (1) in dritte Koordinaten (x3n, y3n, z3n);
- Transformieren der dritten Koordinaten (x3n, y3n, z3n) in Steuerkoordinaten des Lasers (8) und /oder des Bauteils (1);
- Bestrahlen der beschichteten ersten Oberfläche (20) mittels einer Laserstrahlung (13) des Lasers (8) mittels der Steuerkoordinaten;
- Messen der Laserstrahlung (13) auf einer der ersten Oberfläche (20) gegenüberliegender zweiten Oberfläche (21) des Bauteils (1) mittels einer Sensorik (11);
- Vergleichen der durch die Sensorik (11) empfangenen Laserstrahlung (13) mit einem Referenzwert; und
- Abschalten der Laserstrahlung (13) mit Erreichen des Referenzwertes.

2. Verfahren nach Anspruch 1, **dadurch gekennzeichnet, dass** der Schritt des Bereitstellens ein Positionieren des Bauteils (1) in einer Fixiervorrichtung (10) umfasst.

3. Verfahren nach Anspruch 2, **dadurch gekennzeichnet, dass** ein Robotermodul die Fixiervorrichtung (10) greift, um das Bauteil (1) zu positionieren.

4. Verfahren nach Anspruch 1 oder 2, **dadurch gekennzeichnet, dass** der Schritt des Beschichtens ein Beschichten mit einer Grundierschicht (3) und einer Deckschicht (4) umfasst.

5. Verfahren nach einem der vorhergehenden Ansprüche, **dadurch gekennzeichnet, dass** der Schritt des Vermessens ein Vermessen mittels einer 3D-Kamera umfasst.

6. Verfahren nach einem der vorhergehenden Ansprüche, **dadurch gekennzeichnet, dass** der Laser (8) einen Scanner (9) umfasst und der Schritt des Transformierens der dritten Koordinaten in Steuerkoordinaten des Scanners (9) erfolgt.

7. Verfahren nach einem der vorhergehenden Ansprüche, **dadurch gekennzeichnet, dass** der Laser (8) als Kurzpulslaser ausgebildet ist.

8. Verfahren nach einem der vorhergehenden Ansprüche, **dadurch gekennzeichnet, dass** die Sensorik (11) als ein an die mindestens eine herzustellende Musterfigur (6) angepasstes Sensorik (11) Array ausgebildet ist.

9. Verfahren nach einem der vorhergehenden Ansprüche, **dadurch gekennzeichnet, dass** das Herstellen der Musterelemente (5) seriell oder in mehreren Umläufen erfolgt.

10. Verfahren nach einem der vorhergehenden Ansprüche, **dadurch gekennzeichnet, dass** alle Musterelemente (5) mit einem vorab bestimmten Referenzwert bearbeitet werden.
